Europäisches Patentamt

European Patent Office

Office européen des brevets

(19)

(11) Numéro de publication : **0 033 691**
**B1**

(12)

# FASCICULE DE BREVET EUROPÉEN

(45) Date de publication du fascicule du brevet :
13.06.84

(21) Numéro de dépôt : **81400133.5**

(22) Date de dépôt : **28.01.81**

(51) Int. Cl.³ : **H 02 B 13/02, H 01 H 33/42**

---

(54) **Disjoncteur à blindage tripolaire.**

---

(30) Priorité : **31.01.80 JP 11506/80**

(43) Date de publication de la demande :
**12.08.81 Bulletin 81/32**

(45) Mention de la délivrance du brevet :
**13.06.84 Bulletin 84/24**

(84) Etats contractants désignés :
**BE CH DE FR GB IT LI NL SE**

(56) Documents cités :
**CH-A- 567 341**
**FR-A- 1 444 666**

(73) Titulaire : **MERLIN GERIN**
**Rue Henri Tarze**
**F-38050 Grenoble Cedex (FR)**

(72) Inventeur : **Tanimura, Ken-ichi**
**NISSIN ELECTRIC CO. LTD. 47, Umezu-Takase-cho**
**Ukyo-ku Kyoto (JP)**
Inventeur : **Omura, Mitsunori**
**NISSIN ELECTRIC CO. LTD. 47, Umezu-Takase-cho**
**Ukyo-ku Kyoto (JP)**
Inventeur : **Kitsutaka, Yoshiaki**
**NISSIN ELECTRIC CO. LTD. 47, Umezu-Takase-cho**
**Ukyo-ku Kyoto (JP)**

(74) Mandataire : **Kern, Paul et al**
**Merlin Gerin Sce. Brevets 20, rue Henri Tarze**
**F-38050 Grenoble Cedex (FR)**

Jouve, 18, rue St-Denis, 75001 Paris, France

## Description

L'invention est relative à un disjoncteur à blindage tripolaire, notamment d'un poste électrique blindé isolé à l'hexafluorure de soufre, comprenant :

— une enceinte cylindrique de blindage présentant deux tubulures latérales de raccordement des conducteurs d'une travée s'étendant dans un plan diamétral,

— trois paires de contacts allongés disposés longitudinalement en triangle dans ladite enceinte ayant trois contacts mobiles solidarisés respectivement à trois tiges coulissantes de commande,

— un arbre rotatif de commande traversant d'une manière étanche la paroi de ladite enceinte, la partie interne à l'enceinte dudit arbre étant reliée par un mécanisme de liaison auxdites trois tiges de commande et la partie externe coopérant avec un mécanisme de commande logé dans un boîtier de commande adjacent à ladite enceinte.

Un disjoncteur connu du genre mentionné comporte un arbre de commande s'étendant perpendiculairement au plan diamétral de la travée et faisant saillie à l'extérieur de l'enceinte latéralement de cette dernière. La boîte de commande est montée en bout d'arbre et dépasse notablement le gabarit de l'enceinte. Le disjoncteur connu comporte un deuxième arbre de commande mécaniquement couplé à l'arbre de commande principal par une biellette et portant des manivelles de déplacement des tiges de commande des contacts mobiles. Le deuxième arbre de commande est disposé à l'intérieur de l'enceinte ou plus exactement dans un carter prolongeant l'enceinte et l'utilisation de deux arbres de commande multiplie le nombre de joints et d'autres éléments du mécanisme de commande ou de liaison (voir par exemple le document de brevet CH-A5-567 341). La disposition latérale du boîtier de commande augmente l'encombrement de chaque travée et nécessite dans un poste à travées multiples une augmentation correspondante de l'écartement des travées et de ce fait de l'encombrement du poste.

La présente invention a pour but de remédier à cet inconvénient et de permettre la réalisation d'un disjoncteur à commande simplifiée et à encombrement réduit.

Le disjoncteur selon l'invention est caractérisé par le fait que ledit arbre de commande, extérieur audit triangle, s'étend en oblique dudit plan diamétral dans un plan perpendiculaire à l'axe longitudinal de l'enceinte cylindrique.

La disposition oblique de l'arbre de commande permet un actionnement direct des deux contacts mobiles adjacents par des manivelles calées sur l'arbre, le troisième contact mobile étant actionné par l'intermédiaire d'un système de bielles et de culbuteurs. On évite ainsi le deuxième arbre de commande ce qui simplifie notablement l'ensemble du mécanisme. Les trois contacts mobiles sont avantageusement disposés au sommet d'un triangle isocèle dont la base est sensiblement parallèle et en regard des tubulures de raccordement de la travée. Cette disposition permet un raccordement aisé des différents conducteurs aux pôles du disjoncteur, et selon la présente invention, l'arbre de commande est avantageusement parallèle à l'un des côtés égaux du triangle isocèle formé par les trois contacts mobiles. La disposition en oblique de l'arbre de commande permet le logement du boîtier de commande du côté opposé des tubulures de raccordement dans le plan diamétral de la travée. Le boîtier de commande ne dépasse pas latéralement de l'enceinte du disjoncteur et une certaine symétrie de la travée peut être conservée.

Le disjoncteur tripolaire peut être du type à enceinte verticale ou horizontale, le carter du mécanisme étant disposé à l'une des extrémités de l'enceinte. La commande peut être du type hydraulique ou pneumatique ou éventuellement électromécanique.

D'autres avantages et caractéristiques ressortiront plus clairement de la description qui va suivre d'un disjoncteur connu et d'un mode de mise en œuvre de l'invention, respectivement représentés aux figures 1 et 2 et aux figures 3 à 5.

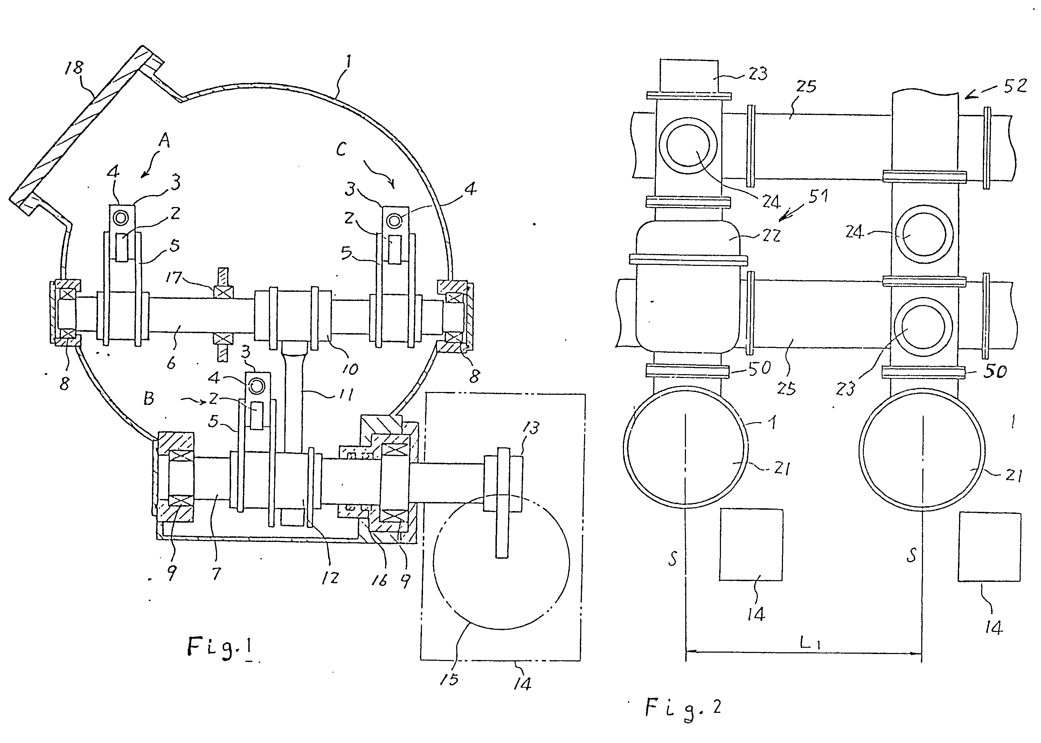

La figure 1 est une coupe transversale d'un disjoncteur connu, montrant le mécanisme de commande.

La figure 2 est une vue en plan d'un poste blindé connu, équipé de disjoncteurs selon la figure 1.

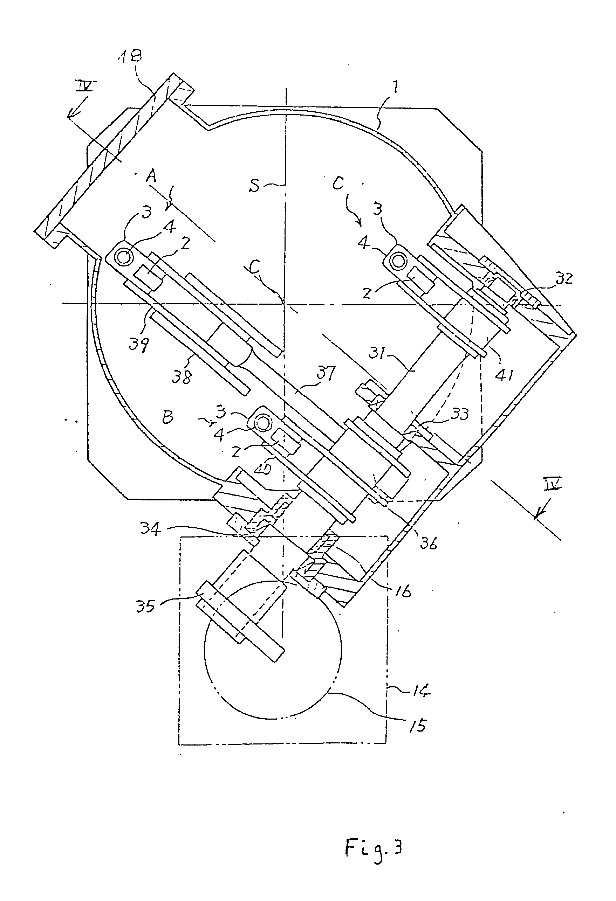

La figure 3 est une vue analogue à celle de la figure 1, montrant un disjoncteur selon l'invention.

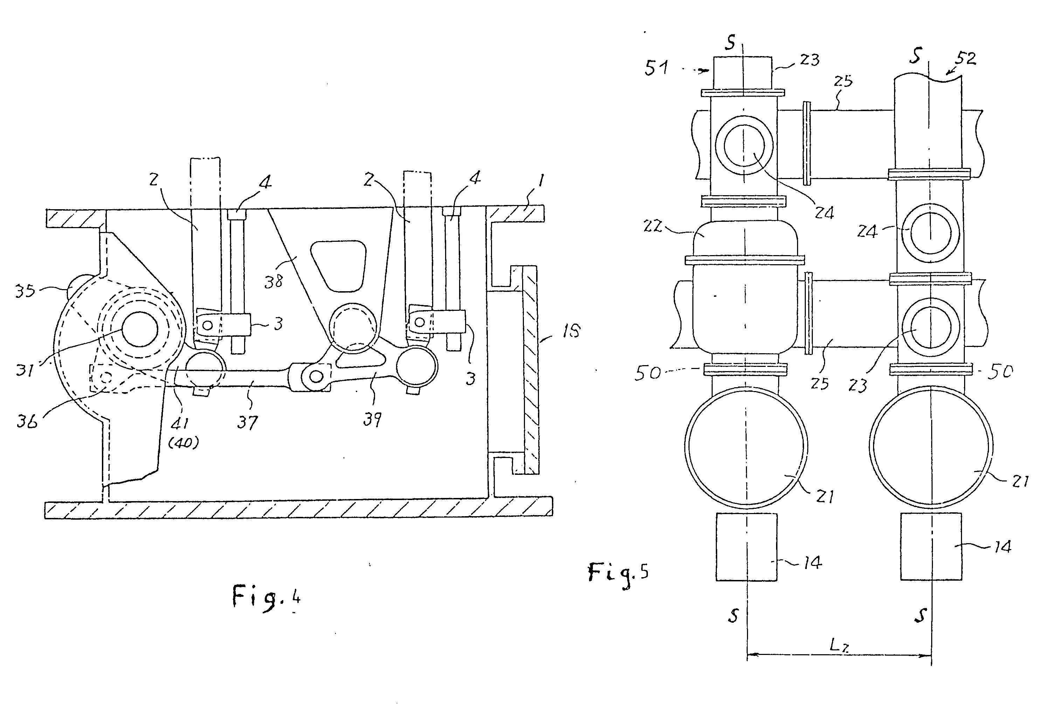

La figure 4 est une coupe suivant la ligne IV-IV de la figure 3.

La figure 5 est une vue analogue à celle de la figure 2, illustrant un poste blindé équipé de disjoncteurs selon l'invention.

En se référant d'abord aux figures 1 et 2, montrant un disjoncteur connu, on voit trois tiges de commande 2 s'étendant longitudinalement à l'intérieur d'une enceinte à enveloppe métallique 1 d'un disjoncteur tripolaire blindé. L'enveloppe métallique 1 de forme cylindrique est mise à la terre et contient un gaz à rigidité diélectrique élevée, notamment de l'hexafluorure de soufre sous pression. A l'intérieur de l'enceinte 1 sont disposées trois paires de contacts, chacune correspondant à l'un des pôles A, B, C du disjoncteur. Les contacts mobiles étant solidarisés aux tiges de commande 2 d'une manière bien connue des spécialistes. Dans l'exemple illustré par les figures, l'enceinte est disposée verticalement et elle présente deux tubulures superposées 50 de raccordement de conducteurs à blindage tripolaire. La figure 2 représente deux travées 51, 52 d'un poste blindé de haute ou de moyenne tension, chacune équipée d'un disjoncteur à enceinte verticale 1. Le poste comporte deux jeux de barres triphasés 25, et chaque travée à disjoncteur 21 est équipée de composants usuels, tels que des transformateurs de courant 22, des sectionneurs de mise à la terre 23, des sectionneurs ou appareils de couplage 24. Tous ces éléments sont disposés dans des enveloppes métalliques mises à la terre.

Chaque disjoncteur 21 comporte un boîtier de commande 14 disposé à l'extérieur de l'enceinte 1 et comprenant le mécanisme de commande, par exemple une commande hydraulique 15 de fermeture et d'ouverture des contacts du disjoncteur. Le boîtier de commande 14 est disposé du côté opposé des travées 51, 52. Le mécanisme de commande est disposé en bout d'arbre 7 pour entraîner ce dernier en rotation par l'intermédiaire d'une manivelle 13 calée sur l'arbre 7. L'arbre 7 traverse avec interposition d'un joint d'étanchéité 16 l'enveloppe 1 et est monté à rotation par des roulements 9 portés par l'enveloppe 1. Un deuxième arbre 6 est monté à rotation par des roulements 8, 17 de l'enveloppe 1 en s'étendant parallèlement à l'arbre 7 intérieurement au triangle formé par les tiges de contact. Les arbres 6, 7 sont reliés mécaniquement par des manivelles 10, 12 calées respectivement sur les arbres 6, 7 et reliées par une biellette 11, de telle manière qu'une rotation de l'arbre 7 est automatiquement transmise à l'arbre 6. Une manivelle 5 clavetée sur l'arbre 7 attaque par l'intermédiaire d'une biellette de liaison un coulisseau 3 solidaire de la tige de commande 2 et guidé par un tube fixe 4. On comprend que le système de manivelle 5, coulisseau 3 transforme le mouvement de rotation de l'arbre 7 en un mouvement de coulissement de la tige 2 pour ouvrir ou fermer les contacts du pôle B associé. Les tiges de commande 2 des deux autres pôles sont reliées d'une manière analogue à des coulisseaux 3 et des manivelles 5 au deuxième arbre de commande 6, de manière à déplacer simultanément l'ensemble des tiges de commande 2 et des contacts mobiles du disjoncteur d'une manière bien connue des spécialistes. Il est facile de voir que cette structure nécessite deux arbres de commande avec leurs roulements de support et que le boîtier de commande 14 dépasse notablement le gabarit de l'enveloppe 1. Pour respecter l'isolement entre les travées successives 51, 52 du poste l'écartement entre ces travées, repéré sur la figure 2 par le repère $L_1$, est relativement important. Un regard 18 donne accès à l'intérieur de l'enveloppe 1, cette dernière pouvant être constituée par un tronçon indépendant au niveau du mécanisme de commande, ce dernier tronçon constituant un carter en communication directe avec l'enceinte 1.

Sur les figures 3 à 5, qui représentent un mode de réalisation selon l'invention, les mêmes numéros de repère sont utilisés pour désigner des pièces analogues ou identiques à celles des figures 1 et 2. On voit que la disposition en triangle isocèle des tiges de commande isolantes 2 est entièrement conservée ainsi que les coulisseaux 3 de guidage des tiges 2 par des tubes 4. Le plan diamétral S de symétrie des travées 51, 52 contient l'axe longitudinal C de l'enceinte cylindrique 1 du disjoncteur et la tige isolante de commande 2 placée du côté de l'enceinte opposé aux tubulures 50. Les deux autres tiges de commande 2 sont disposées symétriquement de part et d'autre de ce plan diamétral S et leur écartement est supérieur à celui des autres côtés du triangle formé par les tiges de commande 2 pour faciliter le passage des conducteurs de connexion des différentes phases. Un arbre de commande 31 est monté à rotation par des roulements 32, 33, 34 et traverse l'enveloppe 1 avec interposition d'un joint d'étanchéité 16. L'arbre 31 s'étend dans un plan horizontal perpendiculaire à l'axe longitudinal C de l'enveloppe 1 en faisant un angle voisin de 45° avec le plan diamétral S. La partie externe de l'arbre 31 porte une manivelle 35 coopérant avec le mécanisme de commande 15 logé dans le boîtier 14. Sur l'arbre 31 sont clavetées à l'intérieur de l'enveloppe 1 deux manivelles 40, 41 attaquant par l'intermédiaire de biellettes les coulisseaux 3 des tiges de commande 2 adjacentes à l'arbre 31. Il convient de noter que l'arbre 31 s'étend parallèlement à l'un des côtés égaux du triangle formé par les trois tiges de contact 2. La tige de commande 2 du troisième contact est commandée par un culbuteur 39 monté à rotation sur une chaise fixe 38 dont l'un des bras attaque le coulisseau 3 et dont l'autre bras est relié par une biellette 37 à une manivelle 36 clavetée sur l'arbre 31. Sur les figures, l'inclinaison de l'arbre 31 est voisin de 45°, mais il est clair que cette inclinaison dépend de la position relative des tiges de commande 2 à l'intérieur de l'enveloppe 1, les tiges de commande 2 des pôles B et C attaquées directement par l'arbre 31, devant être obligatoirement équidistantes de cet arbre. L'arbre 31 fait saillie de l'enveloppe 1 en un point voisin du plan diamétral S permettant le logement du boîtier de commande 14 sensiblement dans le plan diamétral S du côté opposé de la travée en respectant le gabarit de l'enveloppe 1. On voit d'autre part que l'arbre de commande 31 attaque directement deux tiges de commande 2, la troisième tige étant commandée par un dispositif simplifié à culbuteur 39 monté sur un support fixe ou chaise 38. On supprime ainsi le deuxième arbre de commande et des dispositifs associés de support. Le logement du boîtier 14 à l'intérieur du gabarit de l'enveloppe 1 permet un rapprochement des travées successives dont l'écartement $L_2$ ; représenté à la figure 5, peut être notablement inférieur à l'écartement $L_1$ du poste conventionnel connu selon la figure 2.

**Revendications**

1. Disjoncteur à blindage tripolaire, notamment d'un poste électrique blindé isolé à l'hexafluorure de soufre, comprenant :

— une enceinte cylindrique (1) de blindage présentant deux tubulures latérales (50) de raccordement des conducteurs d'une travée (51, 52) s'étendant dans un plan diamétral (S),

— trois paires de contacts allongés disposés longitudinalement en triangle dans ladite enceinte ayant trois contacts mobiles solidarisés respectivement à trois tiges coulissantes (2) de commande,

— un arbre (31) rotatif de commande traversant d'une manière étanche la paroi de ladite enceinte (1), la partie interne à l'enceinte dudit arbre étant reliée par un mécanisme de liaison (40, 41, 37) auxdites trois tiges de commande (2) et la partie externe coopérant avec un mécanisme de commande (15) logé dans un boîtier (14) de commande adjacent à ladite enceinte, caractérisé par le fait que ledit arbre (31) de commande extérieur audit triangle s'étend en oblique dudit plan diamétral (S) dans un plan perpendiculaire à l'axe longitudinal (c) de l'enceinte cylindrique (1).

2. Disjoncteur selon 1, comprenant trois paires de contacts disposées aux sommets d'un triangle isocèle, dont la base en regard desdites tubulures (50) s'étend perpendiculairement audit plan diamétral (S), caractérisé en ce que ledit arbre de commande (31) s'étend parallèlement à l'un des côtés égaux, à l'extérieur dudit triangle et porte deux manivelles (40, 41) de commande directe des deux contacts mobiles disposés aux extrémités dudit côté.

3. Disjoncteur selon 2, caractérisé en ce que l'angle entre ledit arbre de commande (31) et le plan diamétral (S) est voisin de 45°.

4. Disjoncteur selon 1, 2 ou 3, dans laquelle lesdites deux tubulures (50) sont disposées d'un même côté de l'enceinte (1) et ledit boîtier (14) de commande du côté opposé, caractérisé en ce que ledit boîtier (14) s'inscrit dans le gabarit de l'enceinte (1).

5. Disjoncteur selon 4, caractérisé en ce que ledit boîtier (14) de commande est disposé dans ledit plan diamétral (S).

6. Disjoncteur selon 2, caractérisé en ce que ledit arbre de commande (31) porte une troisième manivelle (36) reliée par une biellette (37) à un culbuteur (39) de commande du troisième contact mobile.

7. Disjoncteur selon l'une quelconque des revendications précédentes, caractérisé en ce que ledit arbre de commande (31) et le mécanisme de liaison (40, 41, 37) aux trois tiges (2) de commande sont logés dans un carter prolongeant ladite enceinte (1).

**Claims**

1. Circuit breaker with triple-pole metal-enclosure, in particular a metal-clad power station isolated with sulfur hexafluoride, comprising :

— a shield cylindrical enclosure (1) presenting two side tubulures (50) to connect conductors of a switch bay (51, 52) extending in a diametral plane (S),

— three pairs of elongated contacts longitudinally disposed in a triangle inside said enclosure having three moving contacts linked together on to three control sliding rods (2) respectively,

— a control rotary shaft (31) crossing the wall of said enclosure (1) in an isolated way, the internal part of the enclosure of said shaft being bound to said three control rods (2) by a binding mechanism (40, 41, 37) and the external part cooperating with an operating mechanism (15) located in a control casing (14) adjacent to said enclosure, characterized in that said control shaft (31) outside said triangle extends diagonally of said diametral plane (S) in a plane perpendicular to the longitudinal axis (c) of the cylindrical enclosure (1).

2. Circuit breaker according to 1, comprising three pairs of contacts disposed at the vertex of an isosceles triangle, of which the base facing said tubulures (50) extends perpendicular to said diametral plane (S), characterized in that said control shaft (31) extends parallel to one of the equal sides, outside said triangle and supports two cranks (40, 41) to control directly the two moving contacts disposed at the ends of said side.

3. Circuit breaker according to 2, characterized in that the angle between said control shaft (31) and the diametral plane (S) is close to 45°.

4. Circuit breaker according to 1, 2 or 3, in which said two tubulures (50) are disposed on a same side of the enclosure (1) and said operating casing (14) on the opposite side, characterized in that said casing (14) is inscribed in the enclosure (1) gauge.

5. Circuit breaker according to 4, characterized in that said control casing (14) is disposed in said diametral plane (S).

6. Circuit breaker according to 2, characterized in that said control shaft (31) supports a third crank (36) bound to an operating tumbler (39) of the third moving contact by a link (37).

7. Circuit breaker according to any of the former claims, characterized in that said operating shaft (31) and the binding mechanism (40, 41, 37) to the three control rods (2) are located in a housing extending said enclosure (1).

**Ansprüche**

1. Dreipoliger gekapselter Leistungsschalter, insbesondere einer gekapselten, mit Schwefelhexafluorid isolierten elektrischen Schaltanlage, bestehend aus :

— einem zylindrischen Kapselungsgehäuse (1), das zwei seitliche Röhren (50) aufweist zum Anschluss der Leiter (51, 52) eines sich in einer diametralen Ebene (S) erstreckenden Feldes,

— drei Paar längliche Kontakte in Längsrichtung im Dreieck in dem genannten Gehäuse angeordnet, mit drei beweglichen Kontakten, die je mit drei gleitenden Steuerstangen (2) verbunden sind,

— eine drehbare Steuerwelle (31), welche die Wand des genannten Gehäuses (1) in hermetischer Weise durchdringt, wobei der Teil der Welle im Innern des Gehäuses mittels eines Verbindungsmechanismus (40, 41, 37) mit den drei genannten Steuerstangen (2) verbunden ist, und der äussere Teil mit einem Steuermechanismus (15) zusammenarbeitet, der in einem an das genannte Gehäuse angrenzenden Steuerkasten (14) angeordnet ist, dadurch gekennzeichnet, dass sich die genannte Steuerwelle (31) ausserhalb des genannten Dreiecks zu der diametralen Ebene (S) erstreckt auf einer zur Längsachse (c) des zylindrischen Gehäuses (1) senkrechten Ebene.

2. Schalter gemäss Anspruch 1, mit drei Paar Kontakten, die in den Spitzen eines gleichschenkligen Dreiecks angeordnet sind, dessen den genannten Röhren (50) gegen überliegende Basis sich senkrecht zu der genannten diametralen Ebene (S) erstreckt, dadurch gekennzeichnet, dass sich die genannte Steuerwelle (31) parallel zu einer der gleichen Seiten ausserhalb des genannten Dreiecks erstreckt und zwei Kurbeln (40, 41) zum Direktantrieb von zwei beweglichen an den Enden der genannten Seite angeordneten Kontakten trägt.

3. Schalter gemäss Anspruch 2, dadurch gekennzeichnet, dass der Winkel zwischen der Steuerwelle (31) und der diametralen Ebene (S) nahe bei 45° liegt.

4. Schalter gemäss Anspruch 1, 2 oder 3, in welchem die genannten Röhren (50) auf einer Seite des Gehäuses (1) und der genannte Steuerkasten (14) auf der gegenüberliegenden Seite angeordnet sind, dadurch gekennzeichnet, dass sich der genannte Kasten (14) in das Profil des Gehäuses (1) einfügt.

5. Schalter gemäss Anspruch 4, dadurch gekennzeichnet, dass der genannte Steuerskasten (14) auf der genannten diametralen Ebene (S) angeordnet ist.

6. Schalter gemäss Anspruch 2, dadurch gekennzeichnet, dass die genannte Steuerwelle (31) eine dritte Kurbel (36) trägt, die mittels einer Stange (37) mit einem Kipphebel (39) zum Antrieb des dritten beweglichen Kontaktes verbunden ist.

7. Schalter gemäss irgendeinem der vorhergehenden Ansprüche, dadurch gekennzeichnet, dass die genannte Steuerwelle (31) und der Verbindungsmechanismus (40, 41, 37) der drei Steuerstangen (2) in einem das genannte Gehäuse (1) verlängernde Gehäuse angeordnet sind.

Fig.2

Fig.1

Fig. 3

Fig.4

Fig.5

0 033 691